# EUROPEAN PATENT APPLICATION

(11) **EP 4 257 477 A1**
(43) Date of publication of application: **11.10.2023**
(21) Application number: 22166993.0
(22) Date of filing: 06.04.2022
(51) Int. Cl.: B64B 1/32, B64B 1/06, B64C 39/00, B64D 27/24

(54) **IMPROVED DEVICE AND METHOD FOR INDOOR MONITORING**

(71) Applicant: Exobotic Technologies, 9810 Nazareth (BE)
(72) Inventor: WAEGEMAN, Tim, Nazareth (BE); URBAIN, Gabriel, Nazareth (BE); PERNEEL, Rembrandt, Nazareth (BE)
(74) Representative: Rogiest, Wouter

(57) **Abstract**

The invention provides, amongst other aspects, an aircraft for indoor monitoring, comprising a lifting means; a propulsion means; a positioning means; and a monitoring means; wherein the lifting means comprises a levitation means, preferably is a levitation means; wherein said aircraft extends between two ends along a main direction; wherein the aircraft further comprises, at one end, a docking means for charging, said charging relating at least to the maintenance of an upward force for said levitation means. The invention further provides a system, a docking means for an aircraft, a docking station for charging of an aircraft, and a method for indoor monitoring.

## Description

### Field of the invention

The present invention relates to indoor monitoring by means of an aircraft or similar device.

### Background art

Prior art devices and methods for indoor monitoring typically relate to drones or similar helicopter-based devices or multicopters, i.e., devices comprising a plurality of propellers, e.g., rotational propellers. Such devices rely on propellers as movement means and may be noisy, particularly when propulsion and upward force (relating to up-and-down movement and/or hovering) are entirely propeller-based. For many applications, noise is undesirable in an indoor environment. Also, battery consumption is high, severely limiting the autonomy of the device. Additionally, dropping of the device due to battery depletion of device failure may cause damage to the device and the surrounding.

With respect to monitoring, the mechanical movement of prior art devices with propellers causes significant vibration of further portions of the device, which may reduce the quality and/or reliability and/or resolution and/or accuracy of monitoring means provided on the device, and/or may lead to additional cost, footprint, and weight for the damping of such vibrations. Also, both the noise and the vibrations may interfere with acoustics-based forms of monitoring. Furthermore, the vibrations may interfere with vision-based forms of monitoring, as they may cause a monitored object to move.

External charging is an important consideration for such devices, which must be lightweight to be operable, and hence typically need an external source for maintenance of propulsion and/or upward force.

CN108146608B, CN112373691A and US 9,852,644 B2 disclose related devices but are overly complex and/or lack robustness with respect to charging and/or are not well adapted to the requirements of indoor monitoring.

The present invention aims at addressing issues inherent to indoor monitoring, such as the issues mentioned above.

### Summary of the invention

According to a first aspect, the present invention provides an aircraft for indoor monitoring, comprising: a lifting means; a propulsion means; a positioning means; and a monitoring means;
wherein the lifting means comprises a levitation means, preferably is a levitation means;
wherein said aircraft extends between two ends along a main direction;
wherein the aircraft further comprises, at one end, a docking means for charging, said charging relating at least to the maintenance of an upward force for said levitation means.

Herein, said aircraft extending between two ends along a direction being the main direction, as is the case in, e.g., non-spherical aircrafts, or, e.g., in any elongate aircraft, may have the advantage of allowing to reduce a minimal dimension of said aircraft, with a diameter of a cross section being smaller than a length along the main direction. This may allow for better maneuvering for said aircraft with respect to narrow sections in an environment to be monitored. Thereby, it may be particularly advantageous in indoor environments, since such environments typically require a lot of maneuvering. Moreover, indoor environments typically are less subject to external factors such as wind. Hence, the potential increase of wind impact, by moving way from a spherical shape to an aircraft comprising a main direction, need not be an all-determining factor in the design of the aircraft. This said, the aerodynamics of shape are still important when moving at higher speeds to reduce friction, also in indoor environments. In embodiments, the aircraft is elongate. In embodiments, the aircraft and/or the shape of a levitation means comprised in the aircraft is rocket-shaped or cilinder-shaped or ellipsoid-shaped.

Furthermore, the provision of a docking means at an end of the aircraft, rather than at portions different from the end, may provide for robust charging, since it allows for accurate maneuvering of the aircraft toward a docking station. Thereby, the invention may solve the problem of how to provide robust external charging in indoor environments.

Also, the levitation means may afford reduced size and weight for the aircraft.

Additionally, the presence of the levitation means may allow to introduce and/or maximize a period during which no propulsion is active. This may enable more accurate monitoring, as vibrations produced by rotors are bound to reduce the accuracy of the monitoring. In embodiments, the monitoring means are configured to perform monitoring at least partly in periods during which one or more of the propulsion means are non-active, preferably wherein vibration-prone propulsion means such as rotors, or all propulsion means, are non-active.

According to a second aspect, the invention provides a system for indoor monitoring comprising:
an aircraft according to the invention; and
a docking station;
said aircraft extending between two ends along a main direction and comprising a lifting means comprising a levitation means; said aircraft further comprising, at one end, a docking means for charging, said charging relating at least to the maintenance of an upward force for said levitation means;
wherein said docking station comprises means for charging, preferably a second member which preferably comprises a disc-shaped portion, preferably a guiding member for guiding portions of said aircraft during approaching of the first member toward the second member, said guiding member preferably comprising a conical portion for facilitating said guiding, and preferably a docking beacon for facilitating an alignment of said first member and said second member. The docking station may or may not comprise a second member. The docking station may or may not comprise a guiding member.

Such a system may advantageously provide robust charging for indoor environments, with advantageous combination of a docking means and a docking station.

According to a further aspect, the invention provides a docking means for an aircraft extending between two ends along a main direction and comprising, at one end, said docking means, comprising:
a gas contact, preferably a valve, for charging a levitation means being a buoyancy means comprised in the aircraft and comprising a lifting gas;
a first member preferably circumferentially extending around said valve, preferably according to a disc shape, and preferably comprising a magnetic metal or a magnetic alloy;
preferably, a camera for detecting a docking beacon belonging to a docking station for aligning of said first member and a second member belonging to said docking station along said main direction. The docking means according to the invention may or may not comprise a camera. The first member according to the invention may or may not comprise a magnetic metal.

Such a docking means may advantageously allow robust external charging for aircrafts comprising a buoyancy means.

According to a further aspect, the invention provides a docking station for charging of an aircraft extending between two ends along a main direction and comprising, at one end, a docking means comprising a first member comprising a magnetic metal or a magnetic alloy, the docking station comprising:
means for charging, a levitation means being a buoyancy means comprised in the aircraft and comprising a lifting gas;
a second member comprising a base portion, preferably a disc-shaped base portion, and preferably a receiving member for receiving a valve of said docking means, said receiving member preferably comprising conically-shaped portions for facilitating said receiving, said receiving member preferably comprising a magnet-containing portion or an electromagnet at its distal end, preferably its conically-shaped distal end;
preferably, a guiding member for guiding portions of said aircraft during approaching of the first member toward the second member, said guiding member preferably comprising a conically-shaped element a for facilitating said guiding;
preferably, a docking beacon for facilitating an alignment of said first member and said second member along said main direction. The docking station mayor may not comprise a receiving member. The receiving member, if any, mayor may not comprise a magnet-containing portion. The docking station may or may not comprise a guiding member. The docking station may or may not comprise a docking beacon. The electromagnet, if any, may be configured so that it can be turned on and off.

Such a docking station may advantageously allow robust external charging for aircrafts comprising a buoyancy means.

According to a further aspect, the invention offers a method for indoor monitoring, comprising the steps of:
providing an aircraft extending between two ends along a main direction and comprising a lifting means comprising a levitation means, a propulsion means, a positioning means, a monitoring means, and a docking sensor;
navigating, with said aircraft and by means of said positioning means, over an indoor environment to be monitored, and monitoring, by means of said monitoring means, said environment;
when it is determined that charging is required, navigating toward a docking station preferably being an air-mounted docking station;
detecting, by means of said docking sensor, an alignment between said aircraft and said docking station, preferably by detecting a docking beacon comprised in said docking station;
gradually approaching said docking station while aligning, along said main direction and by means of said detected docking beacon, a first member belonging to a docking means provided at one end of the aircraft, with a second member belonging to the docking station;
preferably, releasably attaching said first member and said second member by means of a magnetic attachment, relating to said first member comprising a magnetic metal or a magnetic alloy and said second member comprising a magnet-containing portion;
during attachment, performing charging, said charging relating to at least one of: the maintenance of an upward force for said levitation means, and/or the providing of electrical power to said aircraft. Thereby, the method may or may not comprise the step of releasably attaching the first member and the second member, i.e. the attachment may or may not relate to magnetic attachment. The docking station may or may not be air-mounted.

Such a method may advantageously afford robustness for charging.

In embodiments, the docking station may be air-mounted by means of a tethered balloon. In-between charging cycles, the balloon may conveniently be lowered for charging a docking station battery comprised in the docking station.

Preferred embodiments and their advantages are provided in the description and the dependent claims.

### Brief description of the drawings

The present invention will be discussed in more detail below, with reference to the attached drawings.
Fig. 1 shows an example aircraft according to the invention.
Fig. 2A-C show example propulsion means according to the invention. Thereby, Fig. 2A shows an example rotor tiltable in two directions. Fig. 2B shows an example of propulsion with a plurality of pivoting flaps, and Fig. 2C shows an example of propulsion with a pivoting lever.
Fig. 3, 4, 5A-B show an example airship according to the invention. Thereby, Fig. 3 shows an example airship (overview), Fig. 4 shows the support portion of the example airship, and Fig. 5 shows the docking means of the example airship, according to a side view (Fig. 5A) and a frontal view (Fig. 5B).
Fig. 6 shows an example docking station according to the invention.
Fig. 7 illustrates the docking principle of an example system according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "aircraft" refers to any device that can fly. This includes any type of aerostat or aerodyne or magnetic levitation aircraft, wherein an aircraft may belong to one or more of these types. Thereby, the term "aerodyne" may relate to any heavier-than-air craft, deriving its lift at least for some part from motion. Examples of aerodyne include an unmanned aerial vehicle (UAV), an airplane, a helicopter. Herein, an unmanned aerial vehicle may relate, e.g., to a drone or a model aircraft or a multicopter, or, equivalently, a multirotor, comprising more than one rotor. On the other hand, the term "aerostat" may relate to any lighter-than-air craft, deriving its lift mainly from buoyancy. Examples of aerostats are a dirigible or a balloon. Herein, the terms "dirigible" and "airship" are used interchangeably. A dirigible may be a power-driven aircraft that is kept buoyant by a body of lifting gas, e.g., helium or hydrogen, which is lighter than air and is confined in an envelope. The airship may be rigid, semi-rigid, or non-rigid. A rigid airship may comprise a rigid envelope supported by an internal framework. A non-rigid airship may comprise a non-rigid envelope kept in shape by the pressure of the lifting gas and may relate to an envelope being a blimp. A semi-rigid airship may relate to a semi-rigid envelope comprising a stiff or partially flexible keel and/or truss supporting the envelope, wherein the outer shape of the envelope may be maintained by pressure of the lifting gas.

As known to the skilled person, aircraft flight is enabled through a balance of forces of lift and thrust, wherein lift is counteracted by gravity, and thrust is counteracted by drag. Accordingly, in this document, the term "lift" relates to a lifting means, able to generate any of up-and-down-movement and/or holding aloft of an aircraft. In this regard, lift may relate to the force that acts at a right angle to the direction of motion through the air. Lift may be generated through one or more of buoyancy and/or electromagnetic force and/or mechanical motion and/or differences in air pressure. Related, lift may be generated by levitation. "Thrust," on the other hand, relates to a propulsion means, generating a force that propels the aircraft in an intended flying direction. The propulsion means may, e.g., relate to one or more of mechanical motion and/or electromagnetic force, wherein the mechanical motion may relate to one or more of translation and/or rotation.

Levitation may relate to providing an upward force on the aircraft that counteracts the pull of gravity. Levitation may relate to active levitation, e.g., based on an electromagnetic force, as with magnetic levitation, and/or passive levitation, e.g., based on buoyancy. In embodiments with magnetic levitation, the levitation may rely on the use of magnetic and electric fields to generate a levitating effect. In embodiments, levitation may relate to a combination of said upward force and a relatively smaller stabilizing force. Hereby, the stabilizing force may enable to push the aircraft toward a desired position or direction whenever a deviation from said desired position or direction is expected, preferably whenever a deviation is detected, e.g., based on optical flow analysis.

Tracking the position of the aircraft, whether absolute position or relative position, may relate to positioning and/or odometry. This may relate to INS and/or GPS/GNSS and/or sonar sensors and/or ultrasonic sensors and/or laser sensors and/or optical sensors. The odometry may relate to visual odometry, wherein subsequent camera images are analyzed, e.g., wherein an optical flow vector is calculated based on a video sequence. In this document, the term "positioning" is used as umbrella term for any form of position tracking, including the tracking of changes of position. In other words, the term "positioning" comprises the determination of both absolute and relative position. Related, the term "positioning means" may relate to any means suitable to determine any of position and change of position, e.g., both position and change of position.

In embodiments, the first member comprises a magnetic material that is a magnetic metal, e.g., iron or nickel or cobalt. In embodiments, the first member comprises a magnetic material that is a magnetic alloy, e.g., steel, alnico, permalloy, an alloy comprising neodymium, a ferroalloy, or an electromagnet. In embodiments, the second member comprises a magnetic contact. This may relate to any type of magnet, e.g., any or any combination of a permanent magnet and/or an electromagnet. In embodiments, the roles of the first and second member are interchanged, with the second member comprising a magnetic material and the first member comprising a magnetic contact. In embodiments, both the first and second member comprise magnetic contacts, e.g., magnets.

In embodiments, the first and/or second member comprise a disc-shaped portion. In preferred embodiments, the first member is disc-shaped and the second member comprises a disc-shaped portion. In preferred embodiments, a disc shape relates to any object having an essentially flat surface extending within an essentially flat contour without sharp indentations or protrusions. The essentially flat surface may thereby relate to the surface of the respective first and second member that faces the other one of the first and second member. The essentially flat surface may comprise one or more cut-outs. In embodiments, the 2D view of the essentially flat surface may be donut-shaped. In embodiments, the first member and/or the disc-shaped portion of the second member may be, in terms of geometry, shaped like a compact disc, wherein the ratio of the inner diameter of the concentrically positioned cut-out and the outer diameter may be any of 4:5, 3:4, 2:3, 1:2, 1:3, 1:4, 1:5, 1:6, 1:7, 1:8, 1:9, 1:10, 1:15, 1:20 or any value between 4:5 and 1:20, or larger than 4:5, or smaller than 1:20. In embodiments, the ratio of the first member outer diameter and the disc-shaped portion of the second member may be any of 5:4, 1:1, 4:5, 3:4, 2:3, 1:2, 1:3, 1:4, 1:5, 1:6, 1:7, 1:8, 1:9, 1:10, 1:15, 1:20 or any value between 5:4 and 1:20, or larger than 5:4, or smaller than 1:20.

In embodiments, the aircraft comprises a battery. The battery may serve to power any of the positioning means and/or the monitoring means and/or the levitation means.

In embodiments, the aircraft comprises visual feedback means on an outward looking surface. This may relate to providing a visual indication relating to the status of the aircraft, e.g., relating to a status of a battery and/or the propulsion means and/or the positioning means and/or the monitoring means and/or the levitation means. In examples, the visual feedback means is a row of colored light emitting diodes, leds, e.g., RGB leds, and the visual feedback relates to indicating a charging status of the levitation means and/or of the battery, for instance the charging status of the levitation means being a buoyancy means relating to gas pressure. Therein, the charging status may be shown as green when charging is sufficient and/or high and a color different from green when charging is insufficient and/or low, respectively.

In embodiments, the aircraft comprises intervention means, i.e., means for performing an intervention comprising the steps of
detecting a portion of the environment to be monitored requiring intervention; and
performing, with respect to said detected portion, the intervention;
wherein said intervention relates to carrying out a physical action with respect to said detected portion. This may be useful for, e.g., any type of indoor monitoring involving detection of a feature with respect to the environment to be monitored, wherein the detection of said feature may be a trigger to perform said physical action. In alternative embodiments, no feature is detected, in which case the intervention may relate, e.g., to an action performed according to a predetermined schedule and/or a randomized schedule.

In example embodiments, the environment to be monitored may relate to a plurality of plants. Thereby, in embodiments, the feature to be detected may be a plant or a portion of a plant or a status of a plant, e.g., a health status of a plant. Feature detection may relate, e.g., to deep learning as known to the skilled person.

In embodiments, the detection comprises detection, preferably mediated by a control unit comprised in the aircraft, based on data retrieved from the monitoring means. In embodiments, the detection comprises based on data retrieved from an external data source, e.g., data retrieved from an external data source during docking via said docking means.

In embodiments, the physical action comprises physically marking said portion, e.g., by means of applying a colouring substance to said portion and/or depositing a tag, e.g., an electronically detectable tag, at said portion.

Said marking may be useful for, e.g., any workflow wherein detection is followed by a subsequent action performed by a human and/or a robot different from said aircraft and/or said aircraft. In example embodiments, the environment to be monitored may relate to a plurality of plants, and the detection and subsequent action may relate to (i) detecting the need for watering or fertilization and (ii) the subsequent action of watering or fertilizing of certain detected plants. In example embodiments, the environment to be monitored may relate to a plurality of plants, and the detection and subsequent action may relate to (i) detecting a health status or readiness (or non-readiness) for harvesting and the subsequent action of (ii) removing non-healthy plants or harvesting (or not harvesting) certain detected plants.

In embodiments, the physical action comprises physically exposing said portion, e.g., by means of electromagnetic or acoustic waves.

Said exposing may be useful for, e.g., any type of treatment or maintenance with respect to the environment to be monitored. In example embodiments, the environment to be monitored may relate to a plurality of plants, and the exposing relates to exposing young plants to infrared for preventing frost. In example embodiments, the environment to be monitored may relate to a plurality of plants comprising chlorophyll, and the physical action may relate to exposing a detected portion of the environment with a stimulus for growth, e.g., light, preferably light comprising UV light. This may relate to detection of young plants and/or plants with stunted growth and to providing a stimulus for growth, such as light, preferably light comprising UV light.

In embodiments, said charging comprises providing electrical power to said aircraft via an electrical contact comprised in said docking means.

In embodiments, said levitation means comprises a buoyancy means being elongate and extending between said two ends along said main direction and comprising a lifting gas; wherein said charging relating to said maintenance of said upward force comprises providing a gas replenishment to said buoyancy means via a gas contact, preferably a valve, comprised in said docking means; and wherein said providing of said electrical power via said electrical contact relates to powering one or more, preferably all, of said propulsion means, said positioning means, and said monitoring means. Such embodiments may advantageously provide a solution to the combined problem of electrical charging and gas replenishment.

In embodiments, said levitation means comprises a magnetic levitation means; wherein said charging relating to said maintenance of said upward force relates to said providing of said electrical power via said electrical contact to said magnetic levitation means.

In embodiments, said docking means comprises a first member, preferably a disc-shaped first member, for releasable attachment to a second member, preferably a second member comprising a base portion being a disc-shaped portion, belonging to a docking station, said releasable attachment relating to a magnetic attachment between said first and said second member, wherein preferably said first member comprises a magnetic metal or a magnetic alloy for said magnetic attachment to said second member comprising a magnet-containing portion or and electromagnet. The electromagnet, if any, may be configured so that it can be turned on and off. Such embodiments may advantageously provide robust and/or predictable docking.

In embodiments, the aircraft further comprises a docking sensor for alignment of said docking means and a docking station during approaching of said docking means and said docking station along said main direction, said alignment preferably relating to detection of a docking beacon comprised in said docking station by said docking sensor; said alignment preferably relating to alignment of said first member and said second member during approaching for realizing said magnetic attachment between said first member and said second member. Such embodiments may allow for increased robustness and/or accuracy for docking.

In embodiments, said releasable attachment realizes an electrical connection between an electrical contact comprised in said second member and an electrical contact comprised in said first member; and wherein said charging comprises providing electric power to said propulsion means, and/or said positioning means and/or said monitoring means and/or said levitation means, preferably to providing electric power to at least each of said propulsion means, said positioning means, and said monitoring means. Such embodiments may advantageously allow to secure a robust electrical interconnection while docking.

In embodiments, said electrical contact involved in said powering also comprises data connection means for data communication to and/or from one or more of: said monitoring means, said lifting means, said propulsion means, said positioning means, and/or a control unit comprised in said aircraft and connected to said monitoring means, said propulsion means, and said positioning means. Such embodiments may advantageously allow docking that combines electrical connectivity with data connectivity. This may be particularly advantageous to increase the autonomy and/or increase robustness and/or reduce the weight of the aircraft, by realizing at least part of the data connectivity via wired connection, rather than realizing all data connectivity via a wireless interface, which may be power-consuming and/or interference-prone.

In embodiments, said levitation means comprises said buoyancy means comprising said lifting gas and said docking means realizes, via respective contacts, and based on said magnetic attachment, each of said gas replenishment, said electrical powering and said data communication. Such embodiments may advantageously provide a docking that combines electrical connectivity, data connectivity and gas replenishment.

In embodiments, said propulsion means comprises one or more of: a rotor tiltable in at least two directions; and/or a plurality of pivoting flaps extending from said aircraft along respective directions for propulsion based on air resistance; and/or a pivoting lever extending from a pivot point comprised in said aircraft for propulsion based on change of center of mass; and/or a fly wheel and/or an ion thruster. When compared to prior art aircrafts, such as those with lifting means that are mainly or entirely propeller-based, such embodiments may have the advantage of reducing the overall power consumption. Also, noise and/or vibrations and/or wind generated by the aircraft may be reduced. Related, increased stability for the monitoring means may lead to more accurate monitoring.

In embodiments, the propulsion means comprises a rotor tiltable in at least two directions. This may relate to two directions of the triplet "roll, pitch, yaw" as known to the skilled person, wherein control is required or intended at least for yaw and pitch. One or more of such rotors may be advantageously combined with the levitation means to yield embodiments with flexible and lightweight up-and-down movement and propulsion. Thereby, the presence of levitation means may afford reduced size and weight for the one or more rotors. In embodiments, the propulsion means comprises an ion thruster instead of or in addition to said rotor.

In embodiments, the propulsion means comprises a plurality of pivoting flaps extending from said aircraft along respective directions for propulsion based on air resistance. Such embodiments may advantageously provide lightweight means for propulsion. Such flaps may furthermore advantageously be combined with a rotor, which may be simplified in view of the presence of the flaps. Particularly, the rotor need not be tiltable according to two directions, with two rotation motors, but may be tiltable according to only a single direction, with one rotation motor, or may be non-tiltable. Such embodiments may lead to a very lightweight design, since the flaps may be lightweight, and the number of rotation motors and/or the size of the rotors and/or the number of rotors may be reduced.

In embodiments, the propulsion means comprises a pivoting lever extending from a pivot point comprised in said aircraft for propulsion based on change of center of mass. Such embodiments may advantageously provide lightweight, compact, and robust means for propulsion. Particularly, the pivoting lever may be located at inner portions of the aircraft, e.g., it may extend within an envelope of buoyancy means of the aircraft, which protects the lever against external factors such as bumping or friction. Such a lever may furthermore advantageously be combined with a rotor, which may be simplified in view of the presence of the lever. Particularly, the rotor need not be tiltable according to two directions, with two rotation motors, but may be tiltable according to only a single direction, with one rotation motor, or may be non-tiltable, wherein the lever acts as pendulum for propulsion based on change of center of mass, which may relate to vectoring. In embodiments, the propulsion means comprises a fly wheel instead of or in addition to said lever.

In embodiments, said positioning means relates to a LIDAR and an optical flow camera each comprised in said aircraft, preferably wherein said positioning means relates to each of a LIDAR, one or more optical flow cameras, and an IMU each comprised in said aircraft. In embodiments, the positioning means comprises, in addition to or instead of said LIDAR and said optical flow camera, one or more cameras that allow determining the location of the environment and its own position within this environment. In embodiments, the positioning means consists merely of one or more cameras that allow determining the location of the environment and its own position within this environment.

In embodiments, the positioning means comprise LIDAR positioning means. In embodiments, the LIDAR means comprise a single array and a single laser beam, allowing low power consumption. In embodiments, the LIDAR means comprise more than one array and/or more than one laser beam. Herein, LIDAR relates to light detection and ranging, or laser detection and ranging, and may relate to 3D laser scanning. The LIDAR positioning means may hereby advantageously allow generating a 3D representation of the environment to be monitored. The detection and ranging may relate to measuring differences in return times of emitted light, preferably laser light, and/or to varying laser wavelengths. The 3D representation generated may advantageously allow positioning.

In embodiments, the positioning means comprise one or more optical flow cameras for retrieving of an image, preferably a sequence of images or a portion of video. In embodiments, the frame rate of the optical flow camera is larger than 50 Hz, preferably is between 50 Hz and 500 Hz, preferably is at least 100 Hz, more preferably is 100 Hz or 200 Hz or 300 Hz or 400 Hz or 500 Hz. This may relate to visual odometry, wherein subsequent camera images are analyzed, e.g., wherein an optical flow vector is calculated based on a video sequence. The positioning means may relate to a single monocular camera, advantageously being lightweight. The positioning means may relate to two or more cameras, e.g., a pair of monocular cameras positioned for stereoscopic imaging, enabling increased accuracy for depth estimation of the environment.

In embodiments, the positioning means comprise one or more optical flow cameras and an IMU. Such embodiments advantageously enable SLAM, particularly V-SLAM.

In embodiments, the aircraft comprises first positioning means being LIDAR positioning means and second positioning means being one or more optical flow cameras. Such embodiments advantageously enable odometry.

In embodiments, the positioning means comprise a LIDAR means, one or more optical flow cameras, and an IMU. Such embodiments advantageously enable accurate SLAM.

In embodiments, the positioning means comprise a tracking camera. In embodiments, the tracking camera comprises lens sensors, preferably two fisheye lens sensors, an IMU, and a VPU for executing SLAM, preferably V-SLAM.

In embodiments, the positioning means relate to INS and/or GPS/GNSS and/or sonar sensors and/or ultrasonic sensors and/or laser sensors and/or optical sensors.

In embodiments, sensor data retrieved from the positioning means processed by means of a neural network. Thereby, the neural network may be trained to perform one or more deep learning tasks, one task relating preferably to denoising of the images. Particularly, in example embodiments, the images retrieved from the one or more cameras may be pre-processed by the neural network.

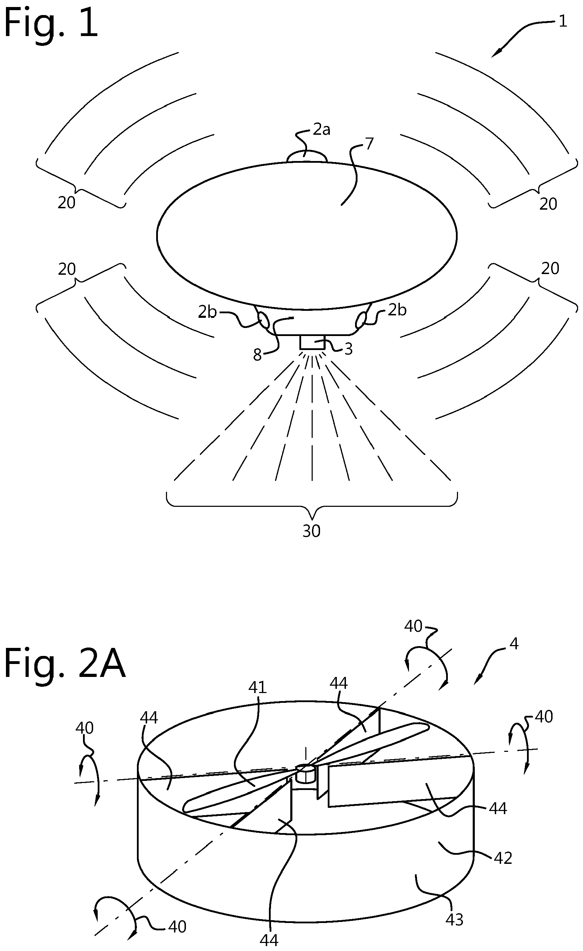

Example embodiments of the invention will be described with reference to Figs. 1-7.

### Example 1: example aircraft according to the invention

Fig. 1 illustrates an example embodiment of a device being an aircraft 1 according to the invention. The example relates to the positioning of the aircraft 1 in the environment. To this end, the aircraft comprises positioning means 2a, 2b.

The aircraft 1 is elongate and extends between two ends along a main direction.

The aircraft 1 comprises a levitation means 7 as lifting means. The lifting means may relate to any form of passive or active levitation, e.g., buoyancy means comprising a lifting gas, or magnetic levitation, or a combination thereof. In this example, the levitation means 7 is elongate, its shape being ellipsoid-like.

The aircraft comprises monitoring means 3 which are electrically powered monitoring means.

Several parts of the aircraft are not shown on Fig. 1 but are included as well: a propulsion means, and a docking means for charging. The propulsion means relates to generating thrust, i.e., a force that propels the aircraft in an intended flying direction. The propulsion means may relate to any of mechanical motion and/or electromagnetic force, wherein the mechanical motion may relate to one or more of translation and/or rotation. The docking means is provided at one of said ends.

The charging, via the docking means, relates to the maintenance of an upward force for the levitation means 7, e.g., the providing of electrical power to the aircraft 1 for powering a magnetic levitation means, and/or of gas replenishment for the buoyancy means. Furthermore, the charging comprises providing electrical power to said aircraft 1 via an electrical contact comprised in said docking means. Particularly, the charging comprises providing electrical power to a battery comprised in the aircraft 1. The battery powers the positioning means 2a, 2b, which are electrically powered positioning means, as well as the monitoring means 3.

The positioning relies on a positioning means comprising a LIDAR 2a and two optical flow cameras 2b. The LIDAR 2a is provided on an upper surface of the aircraft. The two cameras 2b are provided on a support portion 8 of the aircraft provided at a lower part of the aircraft. The two cameras 2b are provided on opposite sides of the support portion 8 and looking away from each other. In their combination, the cameras allow to determine a 3D representation of the environment. The positioning means further comprises an IMU.

The positioning means jointly realize positioning via electromagnetic waves 20, relating to laser, for the LIDAR 2a, and the visual spectrum, for the cameras.

The LIDAR means 2a comprises one array and one laser beam. The optical flow cameras 2b analyze video at high frame rate of 100 Hz for accurate flow tracking and positioning.

The two cameras 2b constitute an optical pair of monocular cameras positioned for stereoscopic imaging, enabling increased accuracy for depth estimation of the environment.

Through the LIDAR 2a, the optical flow cameras 2b and the IMU, the aircraft of this example provides accurate positioning through SLAM. In alternative examples supplementary to Example 1, the positioning means does not relate to LIDAR, optical flow camera or IMU, but instead consists of an upper camera 2a and one or more lower cameras 2b that allow determining a 3D representation of the environment and its own position within this environment.

The monitoring means 3 extends downwardly from the support portion 8, and relates to a multi-purpose sensor comprising, inter alia, a visual sensor and a thermal sensor.

### Example 2A: example propulsion means with rotor

Fig. 2A-C show example propulsion means according to the invention. Thereby, Fig. 2A shows an example rotor 40 tiltable in two directions 40. The two tilting directions are intended to control yaw and pitch of the aircraft. The rotor 4 comprises a propeller 41 mounted pivoting around an axis. The propeller 41 is mounted in a rotor body 42 comprising an annular member 43 circumferentially surrounding said axis, and four planar members 44 extending diametrically within said annular member 43.

### Example 2B: example propulsion means with pivoting flaps

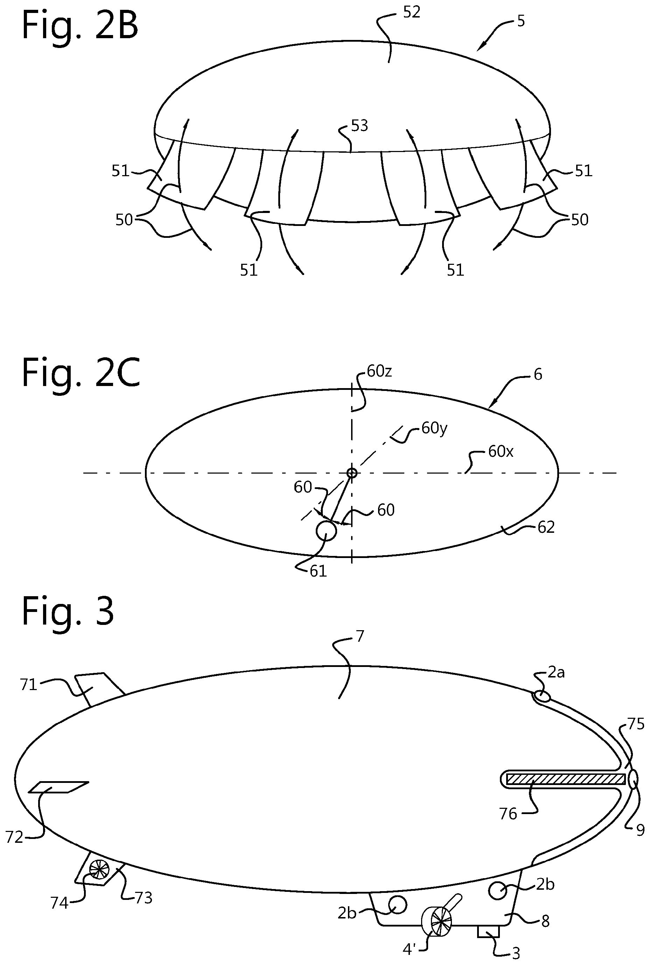

In this example, the propulsion means comprise a plurality of pivoting flaps 51, as illustrated by Fig. 2B, as means for vectoring. The flaps 51, four in number, extend from an actuable body 5, which may relate to or be the aircraft 1 of Example 1 or the airship of Example 3. In this example, the flaps 51 are mounted at equal longitude 53 with respect to the actuable body 5 and extend therefrom according to a rectangular geometry. Thereby, one side of the rectangle serves as pivoting axis whereas the other sides are displaceable in height according to the pivoting motion 50 with respect to the pivoting axis, as actuated by a flap actuation means (not shown). The flaps may advantageously be combined with a rotor (not shown), which, different from the one of Example 2A, is tiltable only according to a single direction.

### Example 2C: example propulsion means with pivoting lever

In this example, the propulsion means comprises a pivoting lever 61, as illustrated by Fig. 2C. The pivoting lever 61 comprises a lever weight and a stem extending between a pivot point and the lever weight. The pivoting lever 61 extends within an actuable body 6, which may relate to or be the aircraft 1 of Example 1 or the airship of Example 3. The pivot point defines a pivot axis according to a direction 60y orthogonal to both the mutually orthogonal main direction 60x of the actuable body 6 and the vertical direction 60z. Portions of the pivoting lever are displaceable in height according to the pivoting motion 60 with respect to the pivoting axis 60y, as actuated by a pivoting lever actuation means (not shown). By actuating the lever, rotation is realized which causes the direction of the aircraft to change. In embodiments with pivoting flaps, such as, e.g., the flaps of Example 2B, the rotation may advantageously be converted into propulsion. Thereby, in this example, the pivoting lever is located at inner portions of the aircraft, particularly, it extends within an envelope of buoyancy means of the aircraft, which protects the lever against external factors such as bumping or friction. The lever 61 may advantageously be combined with a rotor (not shown), which, different from the one of Example 2A, is tiltable only according to a single direction.

### Example 3: example airship according to the invention

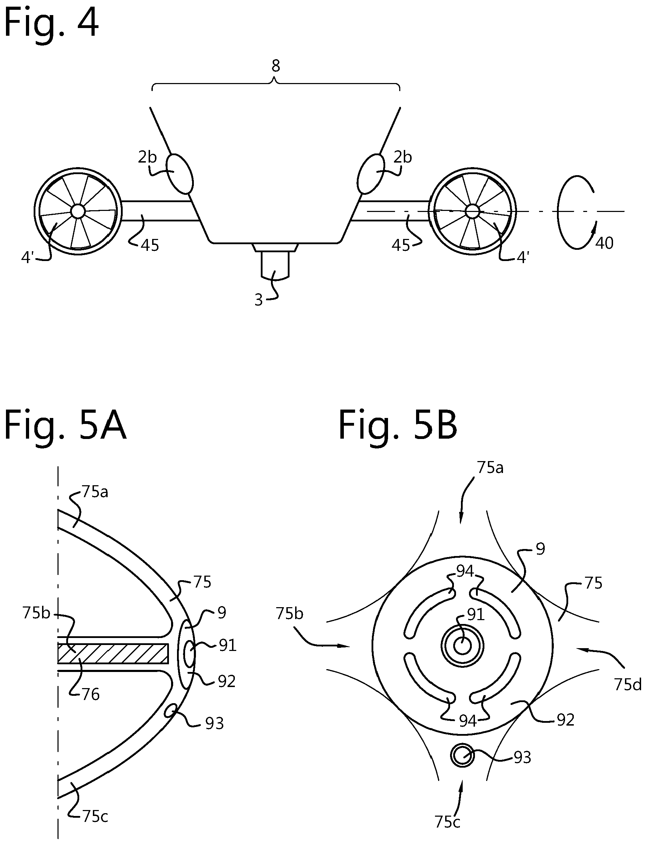

In this example, the aircraft is an airship, shown in Fig. 3, 4, 5A-B. Thereby, Fig. 3 shows the airship (overview), Fig. 4 shows the support portion of the airship, and Fig. 5 shows the docking means of the example airship, according to a side view (Fig. 5A) and a frontal view (Fig. 5B).

The airship comprises a levitation means 7 as lifting means. The airship is elongate and extends between two ends along a main direction. The airship comprises, at one end, a docking means 9 for charging, said charging relating at least to the maintenance of an upward force for said levitation means 7.

The levitation means comprises a buoyancy means 7 that is elongate and extends between said two ends along said main direction. The buoyancy means comprises a lifting gas. The charging relates to each of (i) the maintenance of an upward force for the buoyancy means, (ii) the providing of electrical power to said aircraft 1 via an electrical contact 94 comprised in said docking means 9, and (iii) the providing of a data connection via said electrical contact 94.

The charging comprises providing a gas replenishment to said buoyancy means 7 via a valve 91, comprised in said docking means 9.

The airship comprises monitoring means 3 which are electrically powered monitoring means. The airship further comprises positioning means comprising a LIDAR 2a and four optical flow cameras 2b. The LIDAR 2a is provided on an upper surface of the airship. The four cameras 2b are provided pairwise on a support portion 8 of the aircraft provided at a lower part of the airship. The four cameras 2b are provided, for each respective pair, on opposite sides of the support portion 8 and looking away from each other. The positioning means further comprises an IMU.

The two pairs of cameras 2b together allow for detailed depth imaging of the environment.

The monitoring means 3 extends downwardly from the support portion 8, and relates to a multi-purpose sensor comprising, inter alia, a visual sensor and a thermal sensor.

Near its rear end, the airship comprises an upper 71 and lower 73 stabilizing fin, as well as a pair of lateral fins 72, of which the right fin is shown on Fig. 3. The lower fin 73 comprises a rear rotor 74 for stabilization and for changing direction. Furthermore, at the support portion 8, two tiltable rotors 4' are provided which are connected to the airship via two rotor arms extending along a transversal direction being the tilt axis for the tiltable rotors 4'.

The providing of said electrical power via said electrical contact 94 relates to powering one or more, preferably all, of the propulsion means 4', 74, the positioning means 2a, 2b, and the monitoring means 3.

The charging comprises providing electrical power to a battery comprised in the aircraft 1. The battery powers the positioning means 2a, 2b, which are electrically powered positioning means, as well as the monitoring means 3.

The docking means 9, shown in detail on Fig. 5A and 5B, comprises a docking means body 75 that is starfish-shaped and comprises four arms: an upper 75a, lower 75c, left 75d and right 75b arm.

The aircraft comprises visual feedback means 76 provided on each of the left and right arm 75b, 75d.

The docking means 9 comprises a first member 92 that is disc-shaped. It is adapted in shape for releasable attachment to a second disc-shaped member 12 belonging to a docking station 10, for instance the docking station of Example 4 or 5. The releasable attachment is a magnetic attachment between the first 92 and the second 12 member. To this end, the first member 92 comprises a magnetic metal, and the second member 12 comprises a magnet-containing portion at its contact surface.
The docking means 9 comprises a docking sensor 93 for alignment of said docking means 9 and a docking station 10, e.g., the docking station of Example 4 or 5, during approaching of said docking means 9 and said docking station 10 along said main direction. The alignment relates to alignment of said first member 92 and said second member 12 during approaching. This enables realizing a magnetic attachment between said first member 92 and said second member 12. The releasable attachment realizes an electrical connection between the electrical contact comprised in said second member 12 and the electrical contact 94 comprised in said first member 92. This enables providing electric power to the propulsion means 4', 74, the positioning means 2a, 2b, and the monitoring means 3. This also enables data communication to and/or from the monitoring means 3, the levitation means 7, the propulsion means 4', 74, the positioning means 2a, 2b, and/or a control unit comprised in said aircraft 1 and connected to said monitoring means 3, said propulsion means 4', 74 and said positioning means 2a, 2b.

### Example 4: example docking station according to the invention

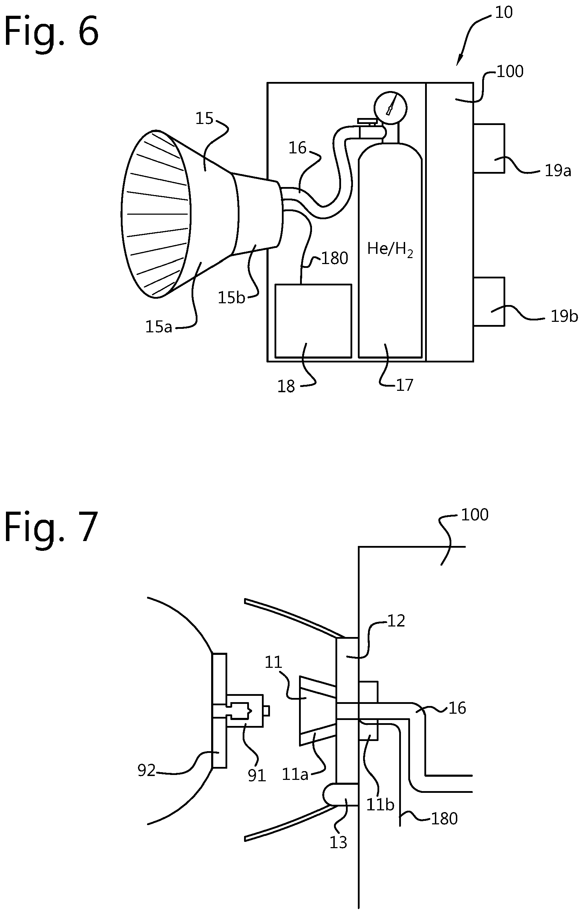

**Fig.** 6 and 7 show an example docking station 10 according to the invention. The docking station 10 is suitable for charging of an aircraft 1 extending between two ends along a main direction and comprising, at one end, a docking means 9 comprising a first member 92 comprising a magnetic metal or a magnetic alloy. This may relate to the aircraft of Example 1 or the airship of Example 3.

The docking station 10 comprises:
means for charging 17, 18 a levitation means 7 being a buoyancy means comprised in the aircraft 1 and comprising a lifting gas;
a second member 12 comprising a disc-shaped base portion, and a receiving member 11 for receiving a valve 91 of said docking means 9, said receiving member 11 comprising conically-shaped portions 11a for facilitating said receiving, said receiving member comprising a magnet-containing portion or electromagnet at its distal end, particularly its conically-shaped distal end;
a guiding member 15 for guiding portions of said aircraft 1 during approaching of the first member 92 toward the second member 12, said guiding member 15 comprising a conically-shaped element 15a for facilitating said guiding;
a docking beacon 13 for facilitating an alignment of said first member 92 and said second member 12 along said main direction.

Particularly, the docking means 9 comprises a docking sensor 93 for alignment of said docking means 9 and the docking station 10, during approaching of said docking means 9 and said docking station 10 along said main direction. The alignment is based on detection of the docking beacon 13 by said docking sensor 93. The alignment relates to alignment of said first member 92 and said second member 12 during approaching for realizing a magnetic attachment between said first member 92 and said second member 12.

The docking station 10 further comprises a docking housing 100 comprising dock attachment means 19a, 19b for attachment of the docking station 10. Thereby, the attachment means 19, 19b are adapted for air mounting, so as to charge the aircraft without requiring it to land, e.g., by mounting of the docking station on a tethered balloon (not shown).

The means of charging 17, 18 relate to gas charging means 17 and electricity charging means. The gas charging means 17 is a container of He or H₂, connected to the rear end of the receiving member 11 via a gas channel 16 that leads into a channel guidance member 11b belonging to the receiving member. The electricity charging means is a charged docking station battery 18 suitable to charge the battery present in the aircraft. It is connected to an electric contact comprised in the second member 12 via a conducting wire 180.

### Example 5: example docking according to the invention

Fig. 7 illustrates the docking principle of an example system according to the invention, comprising the aircraft, on the one hand, and the docking station 10, on the other hand. This may correspond to docking between the docking means 9 of Example 3 and the docking station 10 of Example 4.

### Example 6: example method according to the invention

Example 6 presents an example method for indoor monitoring by means of an aircraft, which may or may not be the aircraft of Example 1 or the airship of Example 3 and 5, with docking station that may or may not be the one of Examples 4 and 5. In view of these similarities, reference numerals are included below, yet without the method being limited to the corresponding elements of Examples 1-5. The example method comprises the steps of:
providing an aircraft 1 extending between two ends along a main direction and comprising a lifting means comprising a levitation means 7 being a buoyancy means comprising a buoyancy gas, a propulsion means 4, 4', 51, 61, a positioning means 2a, 2b, a monitoring means 3, a docking sensor 93, and a battery;
navigating, with said aircraft 1 and by means of said positioning means 2a, 2b, over an indoor environment to be monitored, and monitoring, by means of said monitoring means 3, said environment;
when it is determined that charging is required, navigating toward a docking station 10 being an air-mounted docking station 10;
detecting, by means of said docking sensor 93, an alignment between said aircraft 1 and said docking station 10, by detecting a docking beacon 13 comprised in said docking station 10;
gradually approaching said docking station 10 while aligning, along said main direction and by means of said detected docking beacon 13, a first member 92 belonging to a docking means 9 provided at one end of the aircraft 1, with a second member 12 belonging to the docking station 10;
releasably attaching said first member 92 and said second member 12 by means of a magnetic attachment, relating to said first member 92 comprising a magnetic metal or a magnetic alloy and said second member 12 comprising a magnet-containing portion;
during attachment, performing charging, said charging comprising the maintenance of an upward force for said levitation means 7 through gas replenishment, and the charging of the battery comprised in the aircraft 1.

Herein, the docking station is air-mounted by means of a tethered balloon. In-between charging cycles, the balloon is lowered for charging the docking station battery.

### Example 7: example aircraft with magnetic levitation according to the invention

This example is largely identical to Example 3, except that the levitation means 7 comprises, in addition to buoyancy means, a magnetic levitation means (not shown) powered by said battery. Thereby, the levitation means 7 may have the shape as illustrated in Figure 3 but may also have a different shape. For instance, the aircraft may have an elongate shape yet may have levitation means that do not have a shape reminiscent of an ellipsoid but may have any other shape. This may relate to accommodating for the magnetic levitation means. For instance, the levitation means may comprise buoyancy means portions in the vicinity of the end comprising the docking means, and no buoyancy means portions at the other end. In other examples, the levitation means may comprise buoyancy means portions in a medial zone extending between the two ends, and no buoyancy means portions at any of the ends. In yet other examples, the levitation means may comprise no buoyancy means portions at the end comprising the docking means but may comprise buoyancy means portions in the vicinity of the other end. In such examples, the interface between the docking means and the buoyancy means may be realized by any interconnection means, e.g., a gas conducting channel. In other examples, the magnetic levitation means may extend partially or entirely within the buoyancy means, and the levitation means may have any shape, including an ellipsoid-like shape. (End of example 7.)

In the above, several examples are given wherein the shape of the aircraft and/or the levitation means is ellipsoid-like. However, the aircraft and/or the levitation means may take on any shape. For instance, the aircraft may have levitation means that do not have a shape reminiscent of an ellipsoid. For instance, the aircraft may comprise a spherical portion, which may or may not be comprised in the levitation means, wherein the aircraft extends spherically from a center instead of extending between two ends, thereby defining a sphere. In such examples, the docking means may advantageously be provided on centered top portions or on centered bottom portions of said sphere. For instance, the levitation means may comprise two or more buoyancy means portions connected to the docking means that are essentially separate and that are not mutually communicating. For instance, the levitation means may comprise portions in the vicinity of the end comprising the docking means, and no portions at the other end. In other examples, the levitation means may comprise portions in a medial zone extending between the two ends, and no portions at any of the ends. In yet other examples, the levitation means may comprise no portions at the end comprising the docking means but may comprise portions in the vicinity of the other end.

## Claims

1. An aircraft (1) for indoor monitoring, comprising:
a lifting means;
a propulsion means (4, 4', 51, 61);
a positioning means (2a, 2b); and
a monitoring means (3);
wherein the lifting means comprises a levitation means (7), preferably is a levitation means;
wherein said aircraft extends between two ends along a main direction;
wherein the aircraft further comprises, at one end, a docking means (9) for charging, said charging relating at least to the maintenance of an upward force for said levitation means (7).

2. Aircraft (1) of claim 1, wherein said charging comprises providing electrical power to said aircraft (1) via an electrical contact (94) comprised in said docking means (9).

3. Aircraft (1) of claims 2, wherein said levitation means comprises a buoyancy means (7) being elongate and extending between said two ends along said main direction and comprising a lifting gas; wherein said charging relating to said maintenance of said upward force comprises providing a gas replenishment to said buoyancy means (7) via a gas contact, preferably a valve (91), comprised in said docking means (9); and wherein said providing of said electrical power via said electrical contact (94) relates to powering one or more, preferably all, of said propulsion means (4, 4', 51, 61), said positioning means (2a, 2b), and said monitoring means (3).

4. Aircraft (1) of claims 2-3, wherein said levitation means (7) comprises a magnetic levitation means; wherein said charging relating to said maintenance of said upward force relates to said providing of said electrical power via said electrical contact (94) to said magnetic levitation means.

5. Aircraft (1) of claims 1-4, preferably of claim 3, wherein said docking means (9) comprises a first member (92), preferably a disc-shaped first member, for releasable attachment to a second member (12), preferably a second member comprising a base portion being a disc-shaped portion, belonging to a docking station (10), said releasable attachment relating to a magnetic attachment between said first (92) and said second (12) member, wherein preferably said first member (92) comprises a magnetic metal or a magnetic alloy for said magnetic attachment to said second member (12) comprising a magnet-containing portion.

6. Aircraft (1) of claims 1-5, preferably of claim 5, further comprising a docking sensor (93) for alignment of said docking means (9) and a docking station (10) during approaching of said docking means (9) and said docking station (10) along said main direction, said alignment preferably relating to detection of a docking beacon (13) comprised in said docking station (10) by said docking sensor (93); said alignment preferably relating to alignment of said first member (92) and said second member (12) during approaching for realizing said magnetic attachment between said first member (92) and said second member (12).

7. Aircraft (1) of claims 5-6, preferably of claim 6, wherein said releasable attachment realizes an electrical connection between an electrical contact comprised in said second member (12) and an electrical contact (94) comprised in said first member (92); and wherein said charging comprises providing electric power to said propulsion means (4, 4', 51, 61) and/or said positioning means (2a, 2b) and/or said monitoring means (3) and/or said levitation means (7), preferably to providing electric power to at least each of said propulsion means (4, 4', 51, 61), said positioning means (2a, 2b), and said monitoring means (3).

8. Aircraft (1) of claims 2-7, wherein said electrical contact (94) involved in said powering also comprises data connection means for data communication to and/or from one or more of: said monitoring means (3), said lifting means (7), said propulsion means (4, 4', 51, 61), said positioning means (2a, 2b), and/or a control unit comprised in said aircraft (1) and connected to said monitoring means (3), said propulsion means (4, 4', 51, 61) and said positioning means (2a, 2b).

9. Aircraft (1) of claim 8, wherein said levitation means comprises said buoyancy means (7) comprising said lifting gas and wherein said docking means realizes, via respective contacts (91, 94) and based on said magnetic attachment, each of said gas replenishment, said electrical powering and said data communication.

10. Aircraft (1) of claims 1-9, wherein said propulsion means (4, 4', 51, 61) comprises one or more of:
a rotor (4) tiltable in at least two directions (40); and/or
a plurality of pivoting flaps (51) extending from said aircraft (1) along respective directions for propulsion based on air resistance; and/or
a pivoting lever (61) extending from a pivot point comprised in said aircraft (1) for propulsion based on change of center of mass.

11. Aircraft (1) of claims 1-10, wherein said positioning means (2a, 2b) relates to a LIDAR (2a) and an optical flow camera (2b) each comprised in said aircraft (1), preferably wherein said positioning means (2a, 2b) relates to each of a LIDAR (2a), one or more optical flow cameras (2b) and an IMU each comprised in said aircraft (1).

12. System for indoor monitoring comprising:
an aircraft (1) according to claims 1-11; and
a docking station (10);
said aircraft (1) extending between two ends along a main direction and comprising a lifting means comprising a levitation means (7); said aircraft (1) further comprising, at one end, a docking means (9) for charging, said charging relating at least to the maintenance of an upward force for said levitation means (7);
wherein said docking station comprises means for charging (17, 18), a second member (12), preferably a second member comprising a disc-shaped portion, a guiding member (15) for guiding portions of said aircraft (1) during approaching of the first member (92) toward the second member (12), said guiding member (15) preferably comprising a conical portion (15a) for facilitating said guiding, and preferably a docking beacon (13) for facilitating an alignment of said first member (92) and said second member (12).

13. A docking means for an aircraft (1) extending between two ends along a main direction and comprising, at one end, said docking means (9), comprising:
a gas contact, preferably a valve (91), for charging a levitation means (7) being a buoyancy means comprised in the aircraft (1) and comprising a lifting gas;
a first member (92) circumferentially extending around said valve, preferably according to a disc shape, and comprising a magnetic metal or a magnetic alloy;
a camera for detecting a docking beacon (13) belonging to a docking station (10) for aligning of said first member (92) and a second member (12) belonging to said docking station (10) along said main direction.

14. A docking station (10) for charging of an aircraft (1) extending between two ends along a main direction and comprising, at one end, a docking means (9) comprising a first member (92) comprising a magnetic metal or a magnetic alloy, the docking station (10) comprising:
means for charging (17, 18) a levitation means (7) being a buoyancy means comprised in the aircraft (1) and comprising a lifting gas;
a second member (12) comprising a base portion, preferably a disc-shaped base portion, and a receiving member (11) for receiving a valve (91) of said docking means (9), said receiving member (11) preferably comprising conically-shaped portions (11a) for facilitating said receiving, said receiving member comprising a magnet-containing portion at its distal end, preferably its conically-shaped distal end;
a guiding member (15) for guiding portions of said aircraft (1) during approaching of the first member (92) toward the second member (12), said guiding member (15) preferably comprising a conically-shaped element (15a) for facilitating said guiding;
preferably, a docking beacon (13) for facilitating an alignment of said first member (92) and said second member (12) along said main direction.

15. A method for indoor monitoring, comprising the steps of:
providing an aircraft (1) extending between two ends along a main direction and comprising a lifting means comprising a levitation means (7), a propulsion means (4, 4', 51, 61), a positioning means (2a, 2b), a monitoring means (3), and a docking sensor (93);
navigating, with said aircraft (1) and by means of said positioning means (2a, 2b), over an indoor environment to be monitored, and monitoring, by means of said monitoring means (3), said environment;
when it is determined that charging is required, navigating toward a docking station (10) being an air-mounted docking station (10);
detecting, by means of said docking sensor (93), an alignment between said aircraft (1) and said docking station (10), preferably by detecting a docking beacon (13) comprised in said docking station (10);
gradually approaching said docking station (10) while aligning, along said main direction and by means of said detected docking beacon (13), a first member (92) belonging to a docking means (9) provided at one end of the aircraft (1), with a second member (12) belonging to the docking station (10);
releasably attaching said first member (92) and said second member (12) by means of a magnetic attachment, relating to said first member (92) comprising a magnetic metal or a magnetic alloy and said second member (12) comprising a magnet-containing portion;
during attachment, performing charging, said charging relating to at least one of: the maintenance of an upward force for said levitation means (7), and/or the providing of electrical power to said aircraft (1).
